# EUROPEAN PATENT SPECIFICATION

(11) **EP 2 474 780 B1**
(45) Date of publication and mention of the grant of the patent: **13.03.2019**
(21) Application number: 10854599.7
(22) Date of filing: 10.09.2010
(51) Int. Cl.: F21V 17/10, G02F 1/13357

(54) **BACKLIGHT MODULE AND RUBBER FRAME UNIT STRUCTURE THEREOF**
RÜCKLICHTMODUL UND KAUTSCHUK-RAHMENEINHEITENSTRUKTUR DAFÜR
MODULE DE RÉTRO-ÉCLAIRAGE ET STRUCTURE D'UNITÉ DE CADRE EN CAOUTCHOUC ASSOCIÉE

(30) Priority: 14.07.2010 CN 201010230805
(43) Date of publication of application: 11.07.2012
(73) Proprietor: Shenzhen China Star Optoelectronics Technology Co., Ltd., Shenzhen, Guangdong 518106 (CN)
(72) Inventor: YU, Gang, Shenzhen, Guangdong 518106 (CN)
(74) Representative: Murgitroyd & Company
(86) International application number: PCT/CN2010/076815
(87) International publication number: WO 2012/006807

(56) References cited:
- CN-A- 1 952 745
- CN-A- 101 086 578
- CN-A- 101 639 183
- CN-Y- 2 852 182
- JP-A- 2007 127 706
- US-A1- 2004 008 512
- US-A1- 2006 028 595
- US-A1- 2006 291 242
- US-B1- 6 636 281

## Description

### FIELD OF THE INVENTION

The present invention relates to a backlight module and a housing unit structure thereof, and more particularly to a backlight module applied to different sizes and capable of saving development cost and time and a housing unit structure thereof.

### BACKGROUND OF THE INVENTION

Nowadays, liquid crystal display (LCD) panels are widely applied to various electronic products with growth potential, such as monitors, notebook computers, digital cameras and projectors. After manufacturers of LCD panels fabricate glass substrates, a color filter is firstly combined with the glass substrates, then liquid crystals are filled into the sealed glass substrates and color filter, and further combined with various components, including a backlight module, driver ICs, controller PCBs and etc., to commonly construct a LCD module for selling to downstream manufacturers of notebook computers or LCD monitors.

The backlight module is one of key components of LCD panels. Because the liquid crystals can not emit light by itself, the function of the backlight module is to provide evenly distributed light sources with sufficient brightness for normally showing images. The backlight module comprises various components, such as light sources, a lamp shade, a reflector plate, a light guide plate, a diffusion sheet, a brightness enhancement film and an outer frame.

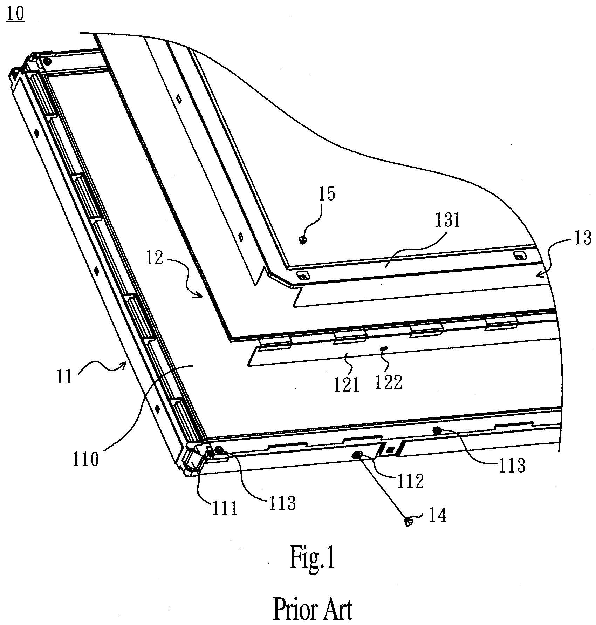

Generally, the backlight module can be divided into two types, i.e. front light type and back light type. Referring now to Fig. 1, a partially exploded perspective view of a traditional liquid crystal module is illustrated, wherein a liquid crystal module 10 substantially comprises a backlight module 11, a liquid crystal panel 12, a front frame 13, a plurality of first screws 14 and a plurality of second screws 15. The backlight module 11 has a plurality of optical films 110 and a housing 111. The housing 111 is a rectangular outer housing, wherein
the optical films 110 are received in the housing 111. Furthermore, the housing 111 has at least one side surface formed with a plurality of first screw holes 112, while the housing 111 further has an upper surface formed with a plurality of second screw holes 113. The liquid crystal panel 12 has a driver circuit board 121 on at least one side thereof, wherein the driver circuit board 121 has a plurality of driver ICs and a plurality of openings 122 on suitable positions thereof. The front frame 13 is a rectangular outer frame, and the front frame 13 has an upper surface formed with a plurality of installation holes 131.

In installation, the liquid crystal panel 12 is firstly disposed on the backlight module 11, and the first screws 14 are used to pass through the openings 122 of the driver circuit board 121 for screw-connecting with the first screw holes 112 on the side surface of the housing 111. Then, the front frame 13 is pressed to dispose on the liquid crystal panel 12, and the second screws 15 are used to pass through the installation holes 131 on the upper surface of the front frame 13 for screw-connecting with the second screw holes 113 on the upper surface of the housing 111. Therefore, the first screws 14 and the second screws 15 can construct the backlight module 11, the liquid crystal panel 12 and the front frame 13 into one-piece liquid crystal module 10.

However, in actual installation, there are still some problems existing in the traditional liquid crystal module 10, as follows: with the continuous increase of types and sizes of LCD panels, the sizes and material of the housing 111 of the backlight module 11 are correspondingly increased. But, various housings 111 with different sizes can not be shared, so that new molds must be continuously developed for manufacturing these housings 111. As a result, the used material of the housing 111 is increased, the development cost and time of the housing 111 is raised, and the material management complexity of the housing 111 is also increased. Furthermore, US Patent Application Pub. No.2004/008512 discloses a housing unit structure of a backlight module, characterized in that: the housing unit structure, with I-shaped or U-shaped, is disposed on an edge of a back plate of a backlight module, and the housing unit structure has an upper surface and a lower surface, wherein the lower surface is used to mounted on the edge of the back plate, and the upper surface is used to support a display panel and a display frame, but it still has the above-mentioned problems. Moreover, US Patent Application Pub. No.2006/028595 discloses a flat display module comprising: a light guide plate; a plurality of fixing mechanisms, and a flat display panel placed above the fixing mechanism and the light guide plate, wherein each of the fixing mechanisms comprises: a top fixing surface; a bottom fixing surface; a fixing sidewall; and at least a panel-fixing fragment; wherein the top fixing surface, the bottom fixing surface, and the fixing sidewall are connected to each other for forming a fixing cavity to position the light guide plate and for fixing the edge of the light guide plate, and the panel-fixing fragment is connected to the fixing sidewall; and a flat display panel placed above the fixing mechanism and the light guide plate. However, when each edge of the flat display module is installed with at least two fixing mechanisms, there is no stable support between the at least two fixing mechanisms on each edge.

As a result, it is necessary to provide a backlight module and a housing unit structure thereof to solve the problems existing in the conventional technologies, as described above.

### SUMMARY OF THE INVENTION

A primary object of the present invention is to provide a housing unit structure of a backlight module, wherein the housing unit structure is disposed on an edge of a back plate of the backlight module for upwardly supporting a LCD panel and a display frame. According to an adjustable modular design, the backlight module only needs to adjust the number of the housing unit structures, and thus the housing can be applied to various backlight modules with different sizes.

A secondary object of the present invention is to provide a backlight module, wherein the edge of the back plate of the backlight module is installed with a plurality of the housing unit structures and buffering strips. According to the adjustable modular design, the backlight module only needs to adjust the number of the housing unit structures and the buffering strips, and thus an entire housing can be constructed. As a result, except for reducing the use of material, the development cost and time of the backlight module can be saved.

To achieve the above object, the present invention provides a housing unit structure of a backlight module, characterized in that: the housing unit structure is disposed on an edge of a back plate of a backlight module, and the housing unit structure has an upper surface and a lower surface, wherein the lower surface is used to mounted on the edge of the back plate, and the upper surface is used to support a display panel and a display frame.

In one embodiment of the present invention, the length of the housing unit structure is shorter than that of the edge of the back plate.

In one embodiment of the present invention, the length of the housing unit structure is smaller than one half of the length of the edge of the back plate.

In one embodiment of the present invention, the housing unit structure further comprises a step portion formed on an inner side edge of the upper surface, wherein the height of the step portion is lower than that of the upper surface, and the step portion is used to support the display panel.

In one embodiment of the present invention, the housing unit structure further comprises a retaining wall extended downward from an outer side edge of the upper surface, wherein the retaining wall is used to abut against an outer periphery of the edge of the back plate.

In one embodiment of the present invention, a printed circuit board of the display panel is attached to an outer surface of the retaining wall, and a lower end of the retaining wall is extended outward to form a hook portion, wherein the hook portion is used to assist to position the printed circuit board of the display panel.

In one embodiment of the present invention, the lower surface is further projected downward to form at least one positioning post which is used to be correspondingly engaged with at least one opening of the edge of the back plate.

In one embodiment of the present invention, the housing unit structure further comprises a convex stage which is projected on the upper surface of the housing unit structure and used to support and connect with the display frame.

In one embodiment of the present invention, a central portion of the convex stage further comprises at least one mounting hole corresponding to at least one thread hole of the edge of the back plate and at least one aperture of the display frame, wherein at least one screwing element passes through the aperture, the mounting hole and the thread hole, so as to mount the display frame and the housing unit structure on the edge of the back plate.

In one embodiment of the present invention, the convex stage is formed with a plurality of reinforced ribs which are distributed around the mounting hole, and the reinforced ribs form a paddy-like (grid-array) arrangement.

In one embodiment of the present invention, an outer surface of the retaining wall further comprises at least two abutting projections for abutting against an inner surface of the display frame.

To achieve another above object, the present invention provides a backlight module which comprises:
a back plate having a first edge, a second edge, a third edge and a fourth edge, wherein the first edge is opposite to the third edge, and the second edge is opposite to the fourth edge;
characterized in that: the backlight module further comprises:
   two housing strips disposed on the first edge and the third edge, respectively;
   a plurality of housing unit structures disposed on the second edge and the fourth edge, respectively, wherein each of the housing unit structures has an upper surface and a lower surface, the lower surface is used to mounted on the second or fourth edge of the back plate, and the upper surface is used to support a display panel and a display frame; and
   a plurality of buffering strips disposed on the second edge and the fourth edge, respectively, wherein the buffering strips are used to compensate a length difference between the housing unit structures and the second or fourth edge.

To achieve one another above object, the present invention provides a backlight module which comprises:
a back plate having a first edge, a second edge, a third edge and a fourth edge, wherein the first edge is opposite to the third edge, and the second edge is opposite to the fourth edge;
characterized in that: the backlight module further comprises:
   a plurality of housing unit structures disposed on the first edge, the second edge, the third edge and the fourth edge, respectively, wherein each of the housing unit structures has an upper surface and a lower surface, the lower surface is used to mounted on the first, second, third or fourth edge of the back plate, and the upper surface is used to support a display panel and a display frame; and
   a plurality of buffering strips disposed on the first edge, the second edge, the third edge and the fourth edge, respectively, wherein the buffering strips are used to compensate a length difference between the housing unit structures and the first, second, third or fourth edge.

In one embodiment of the present invention, the length of the housing unit structure is shorter than that of the first edge, the second edge, the third edge or the fourth edge.

### DESCRIPTION OF THE DRAWINGS

Fig. 1 is an exploded perspective view of a traditional backlight module;
Fig. 2 is a perspective view of a backlight module according to a preferred embodiment of the present invention;
Fig. 3 is a perspective view of a housing unit structure of the backlight module according to the preferred embodiment of the present invention; and
Fig. 4 is a partially cross-sectional view of the backlight module according to the preferred embodiment of the present invention.

### DETAILED DESCRIPTION OF THE PREFERRED EMBODIMENTS

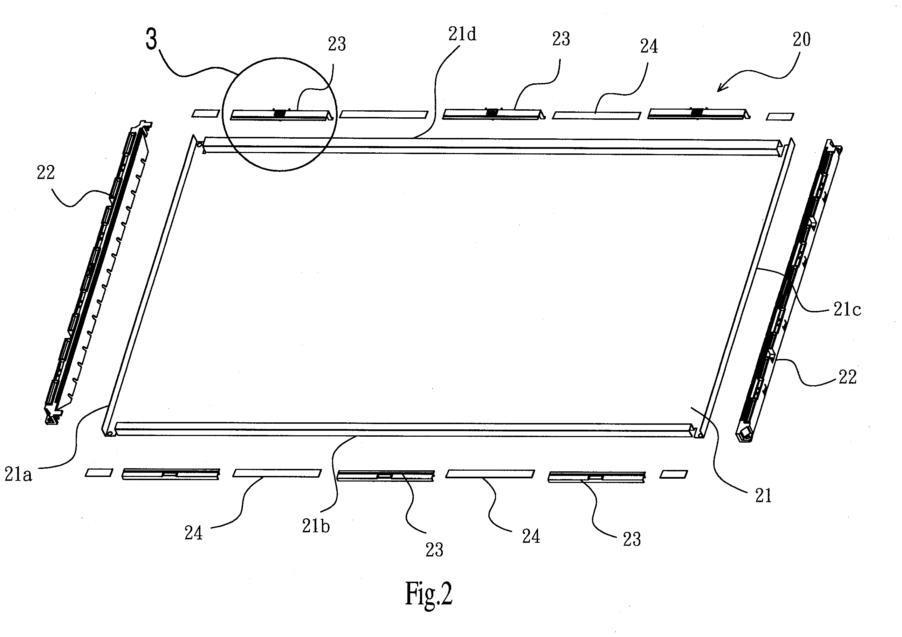

The structure and the technical means adopted by the present invention to achieve the above and other objects can be best understood by referring to the following detailed description of the preferred embodiments and the accompanying drawings, wherein:
Referring now to Fig. 2, Fig. 2 is a perspective view of a backlight module according to a preferred embodiment of the present invention, wherein a backlight module 20 comprises a back plate 21, two housing strips 22, a plurality of housing unit structures 23 and a plurality of buffering strips 24, wherein the back plate 21 has a first edge 21a, a second edge 21b, a third edge 21c and a fourth edge 21d, wherein the first edge 21a is opposite to the third edge 21c, and the second edge 21b is opposite to the fourth edge 21d. The four edges 21a-21d of the back plate 21 are further provided with the two housing strips 22, the plurality of housing unit structures 23 and the plurality of buffering strips 24 thereon.

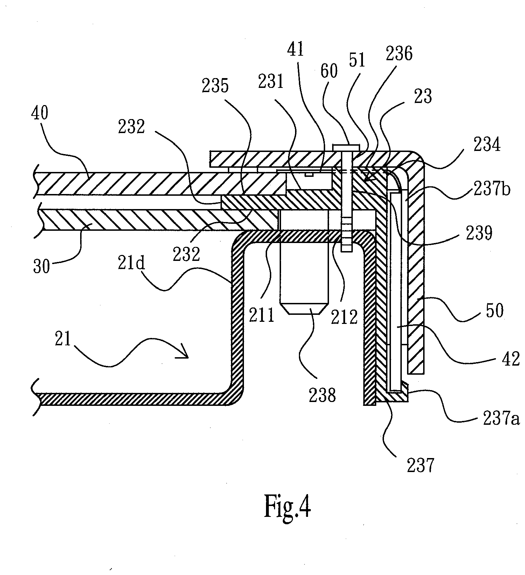

Referring to Fig. 2, the housing strips 22 are disposed on the first edge 21a and the third edge 21c, while the housing unit structures 23 and the buffering strips 24 are disposed on the second edge 21b and the fourth edge 21d. The housing strips 22, the housing unit structures 23 and the buffering strips 24 are commonly construct into a housing which has a main function of upwardly supporting a display panel 40 and a display frame 50, in order to combine into a liquid crystal display (LCD), as shown in Fig. 4.

For more details, a main body of the housing strip 22 is substantially a strip made of engineering plastic material and etc., wherein the housing strips 22 is used to upwardly support the display panel 40 and the display frame 50, as shown in Fig. 5, and generally used to mount backlight lamps (not shown). Furthermore, a main body of the housing unit structure 23 is substantially a strip made of engineering plastic material and etc. In the present invention, the length of the housing unit structure 23 is shorter than that of the second edge 21b (or the fourth edge 21d). For example, the length of the housing unit structure 23 is smaller than one half of the length of the second edge 21b (or the fourth edge 21d) of the back plate 21, such as one fourth, one fifth and etc. The present invention is not limited to the foregoing exemplified lengths of the housing unit structure. Thus, the second edge 21b (and the fourth edge 21d) can be used to dispose a suitable number of the housing unit structures 23, such as three. Moreover, the housing strips 22, the housing unit structures 23 and the buffering strips 24 are not a closed one-piece frame, but are separately manufactured from each other. Meanwhile, at least one of the buffering strips 24 is disposed between each two adjacent housing unit structures 23 (or between the housing unit structure 23 and the housing strip 22) for compensating the gap formed by the housing unit structures 23, i.e. for compensating a length difference between the housing unit structures 23 and the second edge 21b (or the fourth edge 21d). Thus, the buffering strips 24 also have a function of preventing an inner space of the backlight module 20 from laterally leaking light therefrom.

Referring to Fig. 2, the backlight module 20 and the housing unit structures 23 of the present invention use an adjustable modular design, so that the housing unit structures 23 can be applied to various backlight modules 20 with different sizes. In other words, for a liquid crystal display with different size, it only needs to adjust the number of the housing unit structures 23 and the gap therebetween, wherein insufficient portion of the length of the edges can be compensated by suitable number of the buffering strips 24. Thus, it can provide a function of supporting the display panel 40 and the display frame 50, as shown in Fig. 4, so that it will be unnecessary to develop various housing molds with different sizes. As a result, except for reducing the use of material, the development cost and time of the backlight module also can be saved.

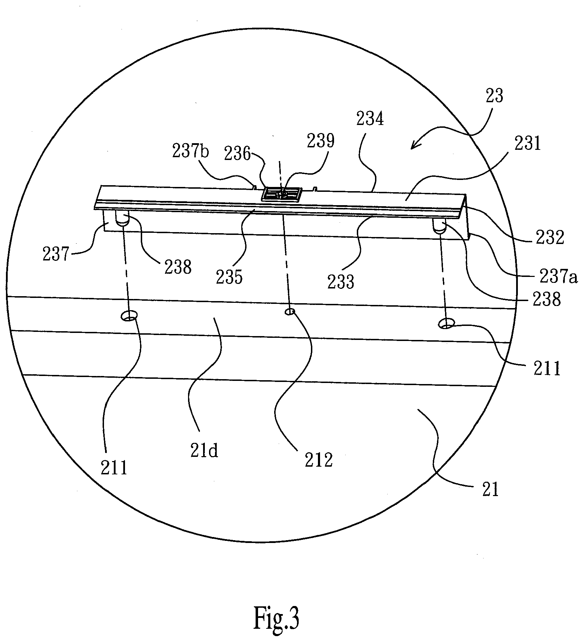

Furthermore, referring to Fig. 3, Fig. 3 is a partially enlarged view of Fig. 2, i.e. a perspective view of a housing unit structure of the backlight module according to the preferred embodiment of the present invention. The housing unit structure 23 is preferably made of engineering plastic, and manufactured by plastic injection molding method without limitation. The detailed structures of the housing unit structure 23 are described, as follows:
Referring to Fig. 3, the housing unit structure 23 has an upper surface 231, a lower surface 232, an inner side edge 233 and an outer side edge 234, wherein the lower surface 232 is used to mount on the second edge 21b or the fourth edge 21d.

Referring to Fig. 3, the housing unit structure 23 further comprises a step portion 235, and the step portion 235 is formed on the inner side edge 233 of the upper surface 231, wherein the height of the step portion 235 is lower than that of the upper surface 231 to form a step-like structure. In addition, the housing unit structure 23 further comprises a convex stage 236 which is projected on the upper surface 231 of the housing unit structure 23 and relatively close to the outer side edge 234 of the upper surface 231. The convex stage 236 is preferably formed with a plurality of reinforced ribs (unlabeled) which are distributed around at least one mounting hole 239 for reinforcing the strength of the convex stage 236 and the mounting hole 239 and saving the material thereof. As shown in Fig. 3, the reinforced ribs preferably form a paddy-like (grid-array) arrangement, but the present invention is not limited thereto.

Furthermore, the housing unit structure 23 can further comprise a retaining wall 237, wherein the retaining wall 237 is extended downward from the outer side edge 234 of the upper surface 231, wherein the retaining wall 237 is used to abut against an outer periphery of the edge 21b or 21d of the back plate 21.

Referring to Figs. 2, 3 and 4, the lower surface 232 of the housing unit structure 23 is further projected downward to form at least one positioning post 238 which is used to be correspondingly engaged with at least one opening 211 of the edge of the back plate 21. The number of the positioning post 238 is preferably two or more for preventing the housing unit structure 23 from being rotated after installation. Besides, the upper surface 231 further comprises at least one mounting hole 239 corresponding to at least one thread hole 212 of the edge of the back plate 21 and at least one aperture 51 of the display frame 50, wherein one screwing element 60 passes through the aperture 51, the mounting hole 239 and the thread hole 212, so as to mount the housing unit structure 23 on the edge of the back plate 21 (such as the fourth edge 21d in Fig. 3). Although the mounting hole 239 as shown in Fig. 3 of the present invention is formed on a central portion of the convex stage 236, but the present invention is not limited thereto, i.e. the mounting hole 239 also can be formed on other position on the housing unit structure 23.

Referring to Fig. 4, Fig. 4 is a partially cross-sectional view of the backlight module according to the preferred embodiment of the present invention, which shows the status of mounting the housing unit structure 23 on the fourth edge 21d. The fourth edge 21d can be selected from various different cross-sectional shapes to match with the housing unit structure 23, wherein the cross-sectional shape of the fourth edge 21d as shown in Fig. 4 is substantially a inverted U-shape.

Referring to Fig. 4, an optical film assembly 30 is mounted on the fourth edge 21d, and the positioning post 238 of the housing unit structure 23 can pass through the opening 211 of the fourth edge 21d of the back plate 21. In addition, the retaining wall 237 of the housing unit structure 23 can abut against the outer periphery of the fourth edge 21d of the back plate 21. Thus, the housing unit structure 23 can clamp the optical film assembly 30.

Moreover, the step portion 235 of the housing unit structure 23 is formed close to the inner side edge 233 of the upper surface 231, while the height of the step portion 235 is lower than that of upper surface 231. Thus, the step portion 235 is suitably used to support the display panel 40 and limit the horizontal movement of the display panel 40. Furthermore, the display panel 40 further comprises: a flexible printed circuit (FPC) board 41 mounted on the fourth edge 21d; and a printed circuit board 42 connected to the flexible printed circuit board 41 in turn. The flexible printed circuit board 41 is extended over the upper surface 231 of the housing unit structure 23, and the printed circuit board 42 is substantially vertically attached to an outer surface of the retaining wall 237. And, as shown in Fig. 4, a lower end of the retaining wall 237 is preferably extended outward to form a hook portion 237a, wherein the hook portion 237a can assist to position the printed circuit board 42 of the display panel 40 for preventing the shaking of the printed circuit board 42.

Referring to Fig. 4, in the last step of entire installation, the display frame 50 is covered on the display panel 40 and the backlight module 20. An inner top surface of the display frame 50 suitably abuts against the convex stage 236. A screwing element 60 passes through the aperture 51 of the display frame 50 and the mounting hole 239 (on the convex stage 236) of the housing unit structure 23 in turn, so as to mount on the thread hole 212 of the fourth edge 21d of the back plate 21 (such as the fourth edge 21d in Fig. 3). Thus, the screwing element 60 can simultaneously connect with the display frame 50, the housing unit structure 23 and the back plate 21, and simultaneously engage with the display panel 40 and the optical film assembly 30, so as to finish the installation of a LCD. In this case, the inner top surface of the display frame 50 or the buffering cushion (not-shown) on the inner top surface can abut against the upper surface of the display panel 40 for preventing the vertical movement of the display panel 40. In addition, an outer surface of the retaining wall 237 preferably further comprises at least two abutting projections 237b for abutting against an inner surface of the display frame 50, so as to prevent the housing unit structure 23 from being accidentally rotated.

Furthermore, although the preferred embodiment of the present invention discloses that the backlight module 20 is commonly constructed by the housing strips 22, the housing unit structures 23 and the buffering strips 24, but the present invention is not limited thereto. In another possible condition of the present invention, the backlight sources of the backlight module 20 don't use the two housing strips 22, so that the backlight module 20 may not comprise the two housing strips 22. In other words, in this condition, the housing unit structures 23 are disposed on the first edge 21a, the second edge 21b, the third edge 21c or the fourth edge 21d, and commonly construct the housing with the buffering strips 24.

As described above, in comparison with the traditional LCD panels which have increasingly types and sizes to cause the increasingly sizes and material of the housings of the backlight modules and thus new molds must be continuously developed to cause the raised development cost and time of the backlight modules, the backlight module 20 and the housing unit structure 23 of the present invention arrange suitable number of the housing unit structures 23 on the second edge 23b and the fourth edge 21d, wherein the backlight module 20 uses an adjustable modular design, so that it only needs to adjust the number of the housing unit structures 23 and the buffering strips 24, so as to be suitably applied to various backlight modules 20 with different sizes. As a result, except for reducing the use of material, the development cost and time of the backlight module 20 can be saved.

The present invention has been described with a preferred embodiment thereof and it is understood that many changes and modifications to the described embodiment can be carried out without departing from the scope of the invention that is intended to be limited only by the appended claims.

## Claims

1. A backlight module (20), comprising:
a back plate (21) having a first edge (21a), a second edge (21b), a third edge (21c) and a fourth edge (21d), wherein the first edge (21a) is opposite to the third edge (21c), and the second edge (21b) is opposite to the fourth edge (21d);
two housing strips (22) disposed on the first edge (21a) and the third edge (21c), respectively; and
a plurality of housing unit structures (23) disposed on the second edge (21b) and the fourth edge (21d), respectively, wherein each of the housing unit structures (23) has an upper surface (231) and a lower surface (232), the lower surface (232) is used to mounted on the second or fourth edge (21b, 21d) of the back plate (21), and the upper surface (231) is used to support a display panel (40) and a display frame (50);
**characterized in that**: the backlight module (20) further comprises: a plurality of buffering strips (24) disposed on the second edge (21b) and the fourth edge (21d), respectively, wherein the buffering strips (24) are filling up the length difference between the housing unit structures (23) on the second and fourth edges (21b, 21d).

2. The backlight module (20) according to Claim 1, **characterized in that**:
the length of the housing unit structure (23) is shorter than that of the second or fourth edge (21b, 21d).

3. The housing unit structure (23) of the backlight module (20) according to Claim 2, **characterized in that**: the length of the housing unit structure (23) is smaller than one half of the length of the edge (21b, 21d) of the back plate (21).

4. The housing unit structure (23) of the backlight module (20) according to Claim 1, **characterized in that**: the housing unit structure (23) further comprises a step portion (235) formed on an inner side edge (233) of the upper surface (231), wherein the height of the step portion (235) is lower than that of the upper surface (231), and the step portion (235) is used to support the display panel (40).

5. The housing unit structure (23) of the backlight module (20) according to Claim 1, **characterized in that**: the housing unit structure (23) further comprises a retaining wall (237) extended downward from an outer side edge (234) of the upper surface (231), wherein the retaining wall (237) is used to abut against an outer periphery of the edge (21b, 21d) of the back plate (21).

6. The housing unit structure (23) of the backlight module (20) according to Claim 5, **characterized in that**: a printed circuit board (42) of the display panel (40) is attached to an outer surface of the retaining wall (237), and a lower end of the retaining wall (237) is extended outward to form a hook portion (237a), wherein the hook portion (237a) is used to assist to position the printed circuit board (42) of the display panel (40).

7. The housing unit structure (23) of the backlight module (20) according to Claim 1, **characterized in that**: the lower surface (232) is further projected downward to form at least one positioning post (238) which is used to be correspondingly engaged with at least one opening (211) of the edge (21b, 21d) of the back plate (21).

8. The housing unit structure (23) of the backlight module (20) according to Claim 1, **characterized in that**: the housing unit structure (23) further comprises a convex stage (236) which is projected on the upper surface (231) of the housing unit structure (23) and used to support and connect with the display frame (50).

9. The housing unit structure (23) of the backlight module (20) according to Claim 8, **characterized in that**: a central portion of the convex stage (236) further comprises at least one mounting hole (239) corresponding to at least one thread hole (212) of the edge (21b, 21d) of the back plate (21) and at least one aperture (51) of the display frame (50), wherein at least one screwing element (60) passes through the aperture (51), the mounting hole (239) and the thread hole (212), so as to mount the display frame (50) and the housing unit structure (23) on the edge (21b, 21d) of the back plate (21).

10. The housing unit structure (23) of the backlight module (20) according to Claim 9, **characterized in that**: the convex stage (236) is formed with a plurality of reinforced ribs which are distributed around the mounting hole (239).

11. The housing unit structure (23) of the backlight module (20) according to Claim 10, **characterized in that**: the reinforced ribs form a grid-array arrangement.

12. The housing unit structure (23) of the backlight module (20) according to Claim 5, **characterized in that**: an outer surface of the retaining wall (237) further comprises at least two abutting projections (237b) for abutting against an inner surface of the display frame (50).

## Patentansprüche

1. Ein Hintergrundbeleuchtungsmodul (20), das Folgendes beinhaltet:
eine Rückplatte (21), die eine erste Kante (21a), eine zweite Kante (21b), eine dritte Kante (21c) und eine vierte Kante (21d) aufweist, wobei die erste Kante (21a) gegenüber der dritten Kante (21c) liegt und die zweite Kante (21b) gegenüber der vierten Kante (21d) liegt;
zwei Gehäuseleisten (22), die jeweils auf der ersten Kante (21a) und der dritten Kante (21c) angeordnet sind; und
eine Vielzahl von Gehäuseeinheitsstrukturen (23), die jeweils auf der zweiten Kante (21b) und der vierten Kante (21d) angeordnet sind, wobei jede der Gehäuseeinheitsstrukturen (23) eine obere Oberfläche (231) und eine untere Oberfläche (232) aufweist, wobei die untere Oberfläche (232) verwendet wird, um auf der zweiten oder vierten Kante (21b, 21d) der Rückplatte (21) montiert zu werden, und die obere Oberfläche (231) verwendet wird, um ein Anzeigepanel (40) und einen Anzeigerahmen (50) zu stützen;
**dadurch gekennzeichnet, dass**: das Hintergrundbeleuchtungsmodul (20) ferner Folgendes beinhaltet: eine Vielzahl von Pufferleisten (24), die jeweils auf der zweiten Kante (21b) und der vierten Kante (21d) angeordnet sind, wobei die Pufferleisten (24) den Längenunterschied zwischen den Gehäuseeinheitsstrukturen (23) auf der zweiten und vierten Kante (21b, 21d) auffüllen.

2. Hintergrundbeleuchtungsmodul (20) gemäß Anspruch 1, **dadurch gekennzeichnet, dass**: die Länge der Gehäuseeinheitsstruktur (23) kürzer als die der zweiten oder vierten Kante (21b, 21d) ist.

3. Gehäuseeinheitsstruktur (23) des Hintergrundbeleuchtungsmoduls (20) gemäß Anspruch 2, **dadurch gekennzeichnet, dass**: die Länge der Gehäuseeinheitsstruktur (23) kleiner als eine Hälfte der Länge der Kante (21b, 21d) der Rückplatte (21) ist.

4. Gehäuseeinheitsstruktur (23) des Hintergrundbeleuchtungsmoduls (20) gemäß Anspruch 1, **dadurch gekennzeichnet, dass**: die Gehäuseeinheitsstruktur (23) ferner einen Stufenbereich (235) aufweist, der an einer inneren Seitenkante (233) der oberen Oberfläche (231) gebildet ist, wobei die Höhe des Stufenbereichs (235) niedriger als die der oberen Oberfläche (231) ist und der Stufenbereich (235) verwendet wird, um das Anzeigepanel (40) zu stützen.

5. Gehäuseeinheitsstruktur (23) des Hintergrundbeleuchtungsmoduls (20) gemäß Anspruch 1, **dadurch gekennzeichnet, dass**: die Gehäuseeinheitsstruktur (23) ferner eine Haltewand (237) beinhaltet, die sich von einer äußeren Seitenkante (234) der oberen Oberfläche (231) nach unten erstreckt, wobei die Haltewand (237) verwendet wird, um an einem äußeren Rand der Kante (21b, 21d) der Rückplatte (21) anzuliegen.

6. Gehäuseeinheitsstruktur (23) des Hintergrundbeleuchtungsmoduls (20) gemäß Anspruch 5, **dadurch gekennzeichnet, dass**: eine Leiterplatte (42) des Anzeigepanels (40) an einer äußeren Oberfläche der Haltewand (237) angebracht ist und sich ein unteres Ende der Haltewand (237) nach außen erstreckt, um einen Hakenbereich (237a) zu bilden, wobei der Hakenbereich (237a) verwendet wird, um zu helfen, die Leiterplatte des (42) Anzeigepanels (40) zu positionieren.

7. Gehäuseeinheitsstruktur (23) des Hintergrundbeleuchtungsmoduls (20) gemäß Anspruch 1, **dadurch gekennzeichnet, dass**: die untere Oberfläche (232) ferner nach unten vorspringt, um mindestens einen Positionierungsstift (238) zu bilden, der verwendet wird, um mit mindestens einer Öffnung (211) der Kante (21b, 21d) der Rückplatte (21) entsprechend in Eingriff gebracht zu werden.

8. Gehäuseeinheitsstruktur (23) des Hintergrundbeleuchtungsmoduls (20) gemäß Anspruch 1, **dadurch gekennzeichnet, dass**: die Gehäuseeinheitsstruktur (23) ferner einen konvexen Abschnitt (236) beinhaltet, der auf der oberen Oberfläche (231) der Gehäuseeinheitsstruktur (23) vorspringt und verwendet wird, um mit dem Anzeigerahmen (50) verbunden zu werden und diesen zu stützen.

9. Gehäuseeinheitsstruktur (23) des Hintergrundbeleuchtungsmoduls (20) gemäß Anspruch 8, **dadurch gekennzeichnet, dass**: ein mittlerer Bereich des konvexen Abschnitts (236) ferner mindestens ein Montageloch (239) beinhaltet, das mindestens einem Gewindeloch (212) der Kante (21b, 21d) der Rückplatte (21) und mindestens einer Apertur (51) des Anzeigerahmens (50) entspricht, wobei mindestens ein Schraubelement (60) durch die Apertur (51), das Montageloch (239) und das Gewindeloch (212) hindurch geht, um den Anzeigerahmen (50) und die Gehäuseeinheitsstruktur (23) auf der Kante (21b, 21d) der Rückplatte (21) zu montieren.

10. Gehäuseeinheitsstruktur (23) des Hintergrundbeleuchtungsmoduls (20) gemäß Anspruch 9, **dadurch gekennzeichnet, dass**: der konvexe Abschnitt (236) mit einer Vielzahl von verstärkten Rippen gebildet ist, die um das Montageloch (239) herum verteilt sind.

11. Gehäuseeinheitsstruktur (23) des Hintergrundbeleuchtungsmoduls (20) gemäß Anspruch 10, **dadurch gekennzeichnet, dass**: die verstärkten Rippen eine Gitter-Array-Anordnung bilden.

12. Gehäuseeinheitsstruktur (23) des Hintergrundbeleuchtungsmoduls (20) gemäß Anspruch 5, **dadurch gekennzeichnet, dass**: eine äußere Oberfläche der Haltewand (237) ferner mindestens zwei Anlagevorsprünge (237b) zum Anliegen an einer inneren Oberfläche des Anzeigerahmens (50) beinhaltet.

## Revendications

1. Un module de rétroéclairage (20), comprenant :
une plaque arrière (21) ayant un premier bord (21a), un deuxième bord (21b), un troisième bord (21c) et un quatrième bord (21d), le premier bord (21a) étant opposé au troisième bord (21c) et le deuxième bord (21b) étant opposé au quatrième bord (21d) ;
deux bandes de logement (22) disposées sur le premier bord (21a) et le troisième bord (21c), respectivement ; et
une pluralité de structures d'unité de logement (23) disposées sur le deuxième bord (21b) et le quatrième bord (21d), respectivement, chacune des structures d'unité de logement (23) ayant une surface supérieure (231) et une surface inférieure (232), la surface inférieure (232) étant utilisée pour le montage sur le deuxième ou le quatrième bord (21b, 21d) de la plaque arrière (21), et la surface supérieure (231) étant utilisée pour soutenir un panneau d'affichage (40) et un cadre d'affichage (50) ;
**caractérisé en ce que** : le module de rétroéclairage (20) comprend en outre : une pluralité de bandes tampons (24) disposées sur le deuxième bord (21b) et le quatrième bord (21d), respectivement, les bandes tampons (24) remplissant l'écart de longueur entre les structures d'unité de logement (23) sur les deuxième et quatrième bords (21b, 21d).

2. Le module de rétroéclairage (20) selon la revendication 1, **caractérisé en ce que** : la longueur de la structure d'unité de logement (23) est plus courte que celle du deuxième ou du quatrième bord (21b, 21d).

3. La structure d'unité de logement (23) du module de rétroéclairage (20) selon la revendication 2, **caractérisée en ce que** : la longueur de la structure d'unité de logement (23) est plus petite qu'une moitié de la longueur du bord (21b, 21d) de la plaque arrière (21).

4. La structure d'unité de logement (23) du module de rétroéclairage (20) selon la revendication 1, **caractérisée en ce que** : la structure d'unité de logement (23) comprend en outre une partie en gradin (235) formée sur un bord latéral interne (233) de la surface supérieure (231), la hauteur de la partie en gradin (235) étant inférieure à celle de la surface supérieure (231), et la partie en gradin (235) étant utilisée pour soutenir le panneau d'affichage (40).

5. La structure d'unité de logement (23) du module de rétroéclairage (20) selon la revendication 1, **caractérisée en ce que** : la structure d'unité de logement (23) comprend en outre une paroi de retenue (237) étendue vers le bas à partir d'un bord latéral externe (234) de la surface supérieure (231), la paroi de retenue (237) étant utilisée pour abouter une périphérie externe du bord (21b, 21d) de la plaque arrière (21).

6. La structure d'unité de logement (23) du module de rétroéclairage (20) selon la revendication 5, **caractérisée en ce que** : une carte de circuit imprimé (42) du panneau d'affichage (40) est fixée à une surface externe de la paroi de retenue (237), et une extrémité inférieure de la paroi de retenue (237) est étendue vers l'extérieur pour former une partie en crochet (237a), la partie en crochet (237a) étant utilisée pour aider à positionner la carte de circuit imprimé (42) du panneau d'affichage (40).

7. La structure d'unité de logement (23) du module de rétroéclairage (20) selon la revendication 1, **caractérisée en ce que** : la surface inférieure (232) est en outre avancée en saillie vers le bas pour former au moins un montant de positionnement (238) qui est utilisé pour être mis en prise de manière correspondante avec au moins une ouverture (211) du bord (21b, 21d) de la plaque arrière (21).

8. La structure d'unité de logement (23) du module de rétroéclairage (20) selon la revendication 1, **caractérisée en ce que** : la structure d'unité de logement (23) comprend en outre un pallier convexe (236) qui fait saillie sur la surface supérieure (231) de la structure d'unité de logement (23) et est utilisé pour soutenir le cadre d'affichage (50) et se raccorder à celui-ci.

9. La structure d'unité de logement (23) du module de rétroéclairage (20) selon la revendication 8, **caractérisée en ce que** : une partie centrale du pallier convexe (236) comprend en outre au moins un trou de montage (239) correspondant à au moins un trou de filetage (212) du bord (21b, 21d) de la plaque arrière (21) et au moins un orifice (51) du cadre d'affichage (50), au moins un élément de vissage (60) passant à travers l'orifice (51), le trou de montage (239) et le trou de filetage (212), de manière à monter le cadre d'affichage (50) et la structure d'unité de logement (23) sur le bord (21b, 21d) de la plaque arrière (21).

10. La structure d'unité de logement (23) du module de rétroéclairage (20) selon la revendication 9, **caractérisée en ce que** : le pallier convexe (236) est formé avec une pluralité de nervures renforcées qui sont réparties autour du trou de montage (239).

11. La structure d'unité de logement (23) du module de rétroéclairage (20) selon la revendication 10, **caractérisée en ce que** : les nervures renforcées forment un agencement en réseau quadrillé.

12. La structure d'unité de logement (23) du module de rétroéclairage (20) selon la revendication 5, **caractérisée en ce que** : une surface externe de la paroi de retenue (237) comprend en outre au moins deux saillies en aboutement (237b) pour abouter une surface interne du cadre d'affichage (50).
